# EUROPÄISCHE PATENTSCHRIFT

(11) **EP 2 718 593 B1**
(45) Veröffentlichungstag und Bekanntmachung des Hinweises auf die Patenterteilung: **13.06.2018**
(21) Anmeldenummer: 12715659.4
(22) Anmeldetag: 11.04.2012
(51) Int. Cl.: F16H 61/688, B60W 20/00

(54) **VERFAHREN ZUM BETREIBEN EINER ANTRIEBSVORRICHTUNG SOWIE VORRICHTUNG ZUM BETREIBEN DER ANTRIEBSVORRICHTUNG**
METHOD FOR OPERATING A DRIVING DEVICE AND DEVICE FOR OPERATING THE DRIVING DEVICE
PROCÉDÉ POUR FAIRE FONCTIONNER UN DISPOSITIF D'ENTRAÎNEMENT AINSI QUE DISPOSITIF POUR LE FONCTIONNEMENT DU DISPOSITIF D'ENTRAÎNEMENT

(30) Priorität: 07.06.2011 DE 102011077125
(43) Veröffentlichungstag der Anmeldung: 16.04.2014
(73) Patentinhaber: Robert Bosch GmbH, 70442 Stuttgart (DE)
(72) Erfinder: MAASS, Alexander, 71636 Ludwigsburg (DE); VIENKEN, Christian, 71665 Vaihingen/Enz (DE)
(86) Internationale Anmeldenummer: PCT/EP2012/056565
(87) Internationale Veröffentlichungsnummer: WO 2012/167970

(56) Entgegenhaltungen:
- EP-A1- 2 474 759
- EP-A2- 1 270 301
- DE-A1- 10 308 692
- DE-A1-102005 048 938
- DE-A1-102008 040 692

## Beschreibung

Die Erfindung betrifft ein Verfahren zum Betreiben einer Antriebsvorrichtung, insbesondere eines Kraftfahrzeugs, wobei die Antriebsvorrichtung wenigstens eine erste Antriebsmaschine, wenigstens eine zweite Antriebsmaschine und ein Doppelkupplungsgetriebe mit einem ersten und einem zweiten Teilgetriebe aufweist, wobei die erste Antriebsmaschine über jeweils eine Kupplung mit einer Antriebsseite des ersten und des zweiten Teilgetriebes und die zweite Antriebsmaschine über eine Kopplungseinrichtung mit der Antriebsseite des ersten oder des zweiten Teilgetriebes verbindbar beziehungsweise verbunden ist, und wobei in zumindest einem Fahrzustand beide Kupplungen geöffnet sind und zumindest für das mit der zweiten Antriebsmaschine verbundene Teilgetriebe kein Fahrgang eingelegt ist. Die Erfindung betrifft weiterhin eine Vorrichtung zum Betreiben der Antriebsvorrichtung.

### Stand der Technik

Verfahren der eingangs genannten Art sind aus dem Stand der Technik bekannt. Sie dienen zum Betreiben der Antriebsvorrichtung. Im Folgenden wird auf einen Anwendungsfall eingegangen, für welchen die Antriebsvorrichtung einem Kraftfahrzeug zugeordnet ist. Selbstverständlich ist sie jedoch auch für jede beliebige andere Anwendung einsetzbar. Die Antriebsvorrichtung verfügt über wenigstens die erste und die zweite Antriebsmaschine, liegt also insbesondere als sogenannte Hybridantriebsvorrichtung vor. Die Hybridantriebsvorrichtung kann ein Antriebsmoment, beispielsweise für ein Antreiben des Kraftfahrzeugs, sowohl nur mit der ersten Antriebsmaschine als auch nur mit der zweiten Antriebsmaschine oder mit beiden gemeinsam erzeugen. Beispielsweise ist die erste Antriebsmaschine eine Brennkraftmaschine und die zweite Antriebsmaschine eine elektrische Maschine. Demnach kann die Antriebsvorrichtung derart betrieben werden, dass die Brennkraftmaschine und die elektrische Maschine das gemeinsame Drehmoment zum Antreiben des Kraftfahrzeugs aufbringen oder ein rein verbrennungsmotorischer Betrieb oder ein rein elektrischer Betrieb der Antriebsvorrichtung erfolgt, das Drehmoment also von lediglich einer der Antriebsmaschinen erzeugt wird.

Das Doppelkupplungsgetriebe der Antriebsvorrichtung weist das erste und das zweite Teilgetriebe auf. In dem ersten Teilgetriebe können zumindest die ungeraden Fahrgänge und in dem zweiten Teilgetriebe zumindest die geraden Fahrgänge eingestellt werden. Jedem der beiden Teilgetriebe ist eine der Kupplungen zugeordnet, wobei über die Kupplungen die erste Antriebsmaschine mit der Antriebsseite des ersten und des zweiten Teilgetriebes verbindbar ist. Auf der der Antriebsseite gegenüberliegenden Seite der Teilgetriebe liegt jeweils eine Abtriebsseite vor. Die Abtriebsseiten der beiden Teilgetriebe stellen gemeinsam einen Antriebsstrang des Kraftfahrzeugs dar beziehungsweise sind beide mit diesem wirkverbunden. Den Teilgetrieben kann somit auf der Antriebsseite ein Drehmoment zugeführt werden, welches in dem jeweiligen Getriebe umgesetzt und anschließend auf der Abtriebsseite dem Antriebsstrang des Kraftfahrzeugs zugeführt wird.

Die erste Antriebsmaschine ist über eine erste der Kupplungen mit der Antriebsseite des ersten Teilgetriebes und über eine zweite der Kupplungen mit der Antriebsseite des zweiten Teilgetriebes unmittelbar verbindbar. Dabei ist jede der Kupplungen unabhängig von der jeweils anderen zur Übertragung eines Drehmoments von der ersten Antriebsmaschine zu dem ersten beziehungsweise zweiten Teilgetriebe beziehungsweise zum Unterbrechen der Verbindung zwischen der ersten Antriebsmaschine und dem jeweiligen Teilgetriebe einstellbar. Unter einem Schließen einer der Kupplungen ist dabei entweder ein vollständiges Schließen oder aber ein lediglich teilweises Schließen zu verstehen. Bei dem vollständigen Schließen wird die Kupplung soweit geschlossen, dass das anliegende Drehmoment vollständig, also ohne Schlupf, übertragen werden kann. Die beiden Kupplungsseiten der Kupplung weisen insofern die gleiche Drehzahl auf. Es ist also nicht notwendig, die Kupplung auf einen maximalen Anpressdruck einzustellen. Bei dem lediglich teilweisen Schließen wird die entsprechende Kupplung lediglich in Schlupf gebracht, sodass die beiden Kupplungsseiten der Kupplung unterschiedliche Drehzahlen aufweisen können.

Beispielsweise wird eine der Kupplungen vollständig und die andere der Kupplungen lediglich teilweise geschlossen. Es kann auch eine Steuerung beziehungsweise Regelung der jeweiligen Kupplung derart erfolgen, dass die Kupplung ein Vorgabemoment überträgt. Bei einem Öffnen einer der Kupplungen soll eine vollständige Entkopplung erreicht sein, also kein Drehmoment übertragen werden.

Dagegen ist die zweite Antriebsmaschine über die Kopplungseinrichtung mit der Antriebsseite des ersten oder des zweiten Teilgetriebes verbindbar beziehungsweise verbunden. Das bedeutet, dass die zweite Antriebsmaschine vorzugsweise permanent mit der Antriebsseite des ersten oder des zweiten Teilgetriebes verbunden ist. Die Kopplungseinrichtung liegt in diesem Fall lediglich als drehmomentübertragende Verbindung zwischen der zweiten Antriebsmaschine und der Antriebsseite des ersten oder des zweiten Teilgetriebes vor. Ein Umschalten der Kopplungseinrichtung derart, dass die zweite Antriebsmaschine abwechselnd mit der Antriebsseite des ersten und des zweiten Teilgetriebes verbunden ist, ist demnach nicht vorgesehen. Eine solche Ausgestaltung der Kopplungseinrichtung ist jedoch selbstverständlich auch möglich. Bei einer solchen kann die Kopplungseinrichtung derart eingestellt werden, dass die zweite Antriebsmaschine mit der Antriebsseite entweder des ersten oder des zweiten Teilgetriebes verbunden ist. Hier ist demnach ein Umschalten zwischen dem ersten und dem zweiten Teilgetriebe möglich. Eine solche Kopplungseinrichtung kann auch als Kupplungseinrichtung bezeichnet werden.

In einer üblichen Ausgestaltung der Antriebsvorrichtung kann mittels der ersten Antriebsmaschine ein größeres Drehmoment erzeugt werden als mit der zweiten Antriebsmaschine. Das mit der zweiten Antriebsmaschine maximal erzeugbare Drehmoment beziehungsweise maximal für das Antriebsmoment bereitstellbare Drehmoment stellt insoweit ein Grenzdrehmoment dar. Vorteilhafterweise werden in diesem auch weitere Drehmomente berücksichtigt, welche auf die zweite Antriebsmaschine wirken. Ein derartiges weiteres Drehmoment ist beispielsweise ein Schleppmoment der Brennkraftmaschine. Das Grenzdrehmoment entspricht also dem maximal erzeugbaren Drehmoment abzüglich der weiteren, ersterem üblicherweise entgegenwirkenden Drehmomente.

Liegt, beispielsweise durch eine entsprechende Betätigung eines Gaspedals durch einen Fahrer des Kraftfahrzeugs, ein Anforderungsmoment vor, welches größer ist als dieses Grenzmoment, so wird wenigstens die erste Antriebsmaschine zur Erzeugung eines Drehmoments genutzt, welches diesem Anforderungsmoment entspricht. Ist das Anforderungsmoment kleiner als das Grenzdrehmoment, so kann die erste Antriebsmaschine abgeschaltet werden und das Drehmoment allein mittels der zweiten Antriebsmaschine erzeugt werden. Insbesondere in diesem Fall kann ein Fahrzustand vorliegen, in welchem beide Kupplungen geöffnet sind und zumindest für das mit der zweiten Antriebsmaschine verbundene Teilgetriebe kein Fahrgang eingelegt ist, beispielsweise bei einem Wechsel des Fahrgangs für dieses Teilgetriebe.

Tritt während dieses Fahrzustands eine Beschleunigungsanforderung auf, beispielsweise durch Betätigen des Gaspedals durch den Fahrer oder auch aufgrund einer Anforderung einer Fahrerassistenzeinrichtung, beziehungsweise liegt ein bestimmtes Anforderungsmoment vor, so muss zunächst für das mit der zweiten Antriebsmaschine verbundene Teilgetriebe ein Fahrgang eingelegt werden, welcher den Anforderungen an die momentane Drehzahl der Abtriebsseite dieses Teilgetriebes beziehungsweise einer Fahrgeschwindigkeit des Kraftfahrzeugs sowie dem Anforderungsmoment Rechnung trägt. Während dieser Zeitdauer kann jedoch der Beschleunigungsanforderung nicht nachgekommen werden, die auf der Abtriebsseite des ersten beziehungsweise des zweiten Teilgetriebes vorliegende Drehzahl also nicht verändert, insbesondere erhöht werden. Erst nach Einlegen des Fahrgangs für das mit der zweiten Antriebsmaschine verbundene Teilgetriebe kann das mittels der zweiten Antriebsmaschine erzeugte Drehmoment auf die Abtriebsseite des entsprechenden Teilgetriebes übertragen werden und somit die dort vorliegende Drehzahl verändert werden. In dem beschriebenen Fahrzustand ist vorzugsweise die erste Antriebsmaschine abgeschaltet, sodass das Drehmoment der Antriebsvorrichtung allein mittels der zweiten Antriebsmaschine erzeugt wird. DE102008040692 offenbart die Merkmale des Oberbegriffs der Ansprüche 1 und 10.

### Offenbarung der Erfindung

Demgegenüber weist das Verfahren mit den in Anspruch 1 genannten Merkmalen den Vorteil auf, dass auch in beziehungsweise ausgehend von dem beschriebenen Fahrzustand, in welchem beide Kupplungen geöffnet sind und zumindest für das mit der zweiten Antriebsmaschine verbundene Teilgetriebe kein Fahrgang eingelegt ist, der Beschleunigungsanforderung schnell, insbesondere nahezu verzögerungsfrei, nachgekommen werden kann. Dazu ist erfindungsgemäß vorgesehen, dass bei Auftreten der Beschleunigungsanforderung während des Fahrzustands die folgenden Schritte durchgeführt werden: Einlegen oder Beibehalten eines Fahrgangs für das nicht mit der zweiten Antriebsmaschine verbundene Teilgetriebe, und Schließen der ersten und der zweiten Kupplung. Idealerweise liegt für das nicht mit der zweiten Antriebsmaschine verbundene Teilgetriebe bereits ein geeigneter Fahrgang vor beziehungsweise ist an diesem eingestellt. In diesem Fall kann der Fahrgang für dieses Teilgetriebe beibehalten werden. Vorzugsweise wird der geeignete Fahrgang bereits eingelegt, bevor der Fahrzustand vorliegt beziehungsweise bevor für das mit der zweiten Antriebsmaschine verbundene Teilgetriebe kein Fahrgang vorliegt. Alternativ kann jedoch auch noch zu diesem Zeitpunkt ein Fahrgang für das nicht mit der zweiten Antriebsmaschine verbundene Teilgetriebe eingelegt beziehungsweise an diesem eingestellt werden. Unter dem Begriff Einlegen ist dabei auch zu verstehen, dass zunächst der momentan eingelegte Fahrgang ausgelegt und anschließend der gewünschte zukünftige Fahrgang eingelegt wird, also ein Fahrgangwechsel vorliegt.

Anschließend werden sowohl die erste als auch die zweite Kupplung geschlossen, entweder gleichzeitig oder mit zeitlichem Abstand. Unmittelbar nach dem Schließen der Kupplungen kann ein Drehmoment der ersten Antriebsmaschine über eine der Kupplungen auf die Abtriebsseite des entsprechenden Teilgetriebes und von dort über das andere Teilgetriebe auf dessen Antriebsseite nicht übertragen werden, weil in dem Fahrzustand für das mit der zweiten Antriebsmaschine verbundene Teilgetriebe kein Fahrgang eingelegt ist. Durch das Schließen der beiden Kupplungen wird das von der zweiten Antriebsmaschine erzeugte Moment zu der ersten Antriebsmaschine geführt, womit sich diese in einem Schleppmodus befindet, also von der zweiten Antriebsmaschine geschleppt wird. Weil beide Kupplungen geschlossen werden, wird das Drehmoment der zweiten Antriebsmaschine über die erste Antriebsmaschine an die Antriebsseite des nicht mit der zweiten Antriebsmaschine verbundenen Teilgetriebes übertragen, für welches ein Fahrgang eingelegt ist.

Demnach wird das Drehmoment auf die Abtriebsseite des Doppelkupplungsgetriebes und somit an den Antriebsstrang des Kraftfahrzeugs übertragen, obwohl für das mit der zweiten Antriebsmaschine (unmittelbar) verbundene Teilgetriebe kein Fahrgang eingelegt ist. Das Drehmoment der zweiten Antriebsmaschine wird demnach über die Kupplung, über welche die erste Antriebsmaschine mit demjenigen Teilgetriebe verbindbar ist, das mit der zweiten Antriebsmaschine (unmittelbar) verbunden ist, zu der ersten Antriebsmaschine übertragen. Anschließend wird es über die Kupplung, über welche die erste Antriebsmaschine mit demjenigen Teilgetriebe verbindbar ist, welches nicht (unmittelbar) mit der zweiten Antriebsmaschine verbunden ist, zu dem Teilgetriebe übertragen, welches nicht (unmittelbar) mit der zweiten Antriebsmaschine verbunden ist. Von dort gelangt es nach Umsetzung des Drehmoments beziehungsweise der Drehzahl zu dem Antriebsstrang und dient somit der Umsetzung der Beschleunigungsanforderung. Bei dieser Vorgehensweise ist es somit möglich, mit lediglich geringer, insbesondere ohne Zeitverzögerung das Drehmoment von der zweiten Antriebsmaschine zum Umsetzen der Beschleunigungsanforderung zu nutzen, obwohl für das mit der zweiten Antriebsmaschine (unmittelbar) verbundene Teilgetriebe kein Fahrgang eingelegt ist und unter Umständen die erste Antriebsmaschine abgeschaltet ist.

Eine Weiterbildung der Erfindung sieht vor, dass zunächst die Kupplung geschlossen wird, über welche die erste Antriebsmaschine mit demjenigen Teilgetriebe verbindbar ist, das mit der zweiten Antriebsmaschine verbunden ist, oder dass die erste und die zweite Kupplung gleichzeitig geschlossen werden. Ist die momentane Drehzahl der zweiten Antriebsmaschine unterschiedlich von der Drehzahl auf der Antriebsseite des entsprechenden Teilgetriebes, so wird vorzugsweise zunächst die Kupplung geschlossen, über welche die erste Antriebsmaschine mit demjenigen Teilgetriebe verbindbar ist, das mit der zweiten Antriebsmaschine verbunden ist. Auf diese Weise wird lediglich die erste Antriebsmaschine an die zweite Antriebsmaschine angekoppelt. Anschließend kann die Drehzahl der zweiten Antriebsmaschine und damit auch der ersten Antriebsmaschine an die auf der Antriebsseite des nicht mit der zweiten Antriebsmaschine verbundenen Teilgetriebes vorliegende Drehzahl angepasst werden. Alternativ ist selbstverständlich auch eine höhere Drehzahl an der zweiten Antriebsmaschine einstellbar, insbesondere wenn ein Beschleunigen des Kraftfahrzeugs beziehungsweise des Antriebsstrangs durchgeführt werden soll.

Wie vorstehend bereits angedeutet, kann jedoch auch ein gleichzeitiges Schließen der beiden Kupplungen vorgesehen sein. Das gleichzeitige Schließen der beiden Kupplungen wird vorzugsweise dann umgesetzt, wenn die Antriebsseite des nicht mit der zweiten Antriebsmaschine verbundenen Teilgetriebes mit der Drehzahl der zweiten Antriebsmaschine im Wesentlichen übereinstimmt. Dies ist insbesondere dann der Fall, wenn für dieses Teilgetriebe bereits ein Fahrgang eingelegt wurde, mit welchem die auf der Abtriebsseite des Teilgetriebes vorliegende Drehzahl auf eine antriebsseitige Drehzahl umgesetzt wird, welche der Drehzahl der zweiten Antriebsmaschine zumindest näherungsweise entspricht.

Eine Weiterbildung der Erfindung sieht vor, dass nach dem Schließen der ersten und/oder der zweiten Kupplung die Drehzahl der zweiten Antriebsmaschine auf eine Vorgabedrehzahl eingestellt wird. Das Einstellen der Vorgabedrehzahl kann in jedem der beiden vorstehend beschriebenen Fälle erfolgen, also sowohl nach dem gleichzeitigen Schließen beider Kupplungen als auch nach dem Schließen lediglich der Kupplung, über welche die erste Antriebsmaschine mit demjenigen Teilgetriebe verbindbar ist, das mit der zweiten Antriebsmaschine verbunden ist. Die Vorgabedrehzahl kann dabei, wie vorstehend ausgeführt, der auf der Antriebsseite des nicht mit der zweiten Antriebsmaschine verbundenen Teilgetriebes vorliegenden Drehzahl entsprechen, jedoch auch höher sein, insbesondere wenn eine Beschleunigung des Kraftfahrzeugs beziehungsweise des Antriebsstrangs durchgeführt werden soll. Wurde bisher lediglich die erste oder die zweite Kupplung geschlossen, so kann nach dem Einstellen der Drehzahl auf die Vorgabedrehzahl auch die andere Kupplung geschlossen werden, also diejenige Kupplung, über welche die erste Antriebsmaschine mit demjenigen Teilgetriebe verbindbar ist, das nicht mit der zweiten Antriebsmaschine verbunden ist.

Eine Weiterbildung der Erfindung sieht vor, dass nach dem Schließen der ersten und/oder der zweiten Kupplung die erste Antriebsmaschine, insbesondere in Abhängigkeit von einem Anforderungsmoment und/oder einer Mindestdrehzahl, in einem Schleppmodus oder einem Antriebsmodus betrieben wird. Unter dem Schleppmodus ist dabei eine Betriebsart der ersten Antriebsmaschine zu verstehen, in welchem diese allein von der zweiten Antriebsmaschine angetrieben wird, es findet also keine Energiezufuhr an die erste Antriebsmaschine statt. Unter dem Antriebsmodus ist dagegen eine Betriebsart zu verstehen, bei welcher der ersten Antriebsmaschine Energie zugeführt wird. Beispielsweise ist die erste Antriebsmaschine eine Brennkraftmaschine. In dem Schleppmodus finden insoweit keine Kraftstoffzufuhr und insbesondere auch keine Zündung statt. In dem Antriebsmodus wird dagegen Kraftstoff zugeführt und die Zündung durchgeführt.

War die erste Antriebsmaschine vor beziehungsweise bei Auftreten der Beschleunigungsanforderung abgeschaltet, so wird sie gestartet, wenn sie in dem Antriebsmodus betrieben werden soll. Zu diesem Zweck wird sie mittels der zweiten Antriebsmaschine auf eine Startdrehzahl geschleppt, welche zum erfolgreichen Starten der ersten Antriebsmaschine notwendig ist. Zusätzlich oder alternativ kann zum Starten der Brennkraftmaschine auch ein Direktstartverfahren durchgeführt werden, bei welchem es durch gezieltes Einspritzen von Kraftstoff und gezieltes Zünden möglich ist, ohne Mitwirkung eines Starters die Brennkraftmaschine aus dem Stillstand in wenigen Umdrehungen auf ihre Leerlaufdrehzahl zu beschleunigen.

Ob die erste Antriebsmaschine in dem Schleppmodus oder dem Antriebsmodus betrieben wird, wird vorzugsweise in Abhängigkeit von dem Anforderungsmoment festgelegt. Liegt das Anforderungsmoment unter dem Grenzmoment, also dem allein von der zweiten Antriebsmaschine erzeugbaren Drehmoment, so wird der Schleppmodus gewählt. Ist dagegen das Anforderungsmoment gleich oder größer dem Grenzmoment, so wird die Antriebsmaschine in dem Antriebsmodus betrieben. Zusätzlich oder alternativ kann bei dieser Entscheidung auf die Mindestdrehzahl berücksichtigt werden. Liegt die Drehzahl der zweiten Antriebsmaschine unterhalb der Mindestdrehzahl, so wird die erste Antriebsmaschine in dem Schleppmodus betrieben, ist sie größer oder gleich, so kann der Antriebsmodus gewählt werden. Die Mindestdrehzahl ist dabei vorzugsweise die Drehzahl, ab welcher die erste Antriebsmaschine betrieben beziehungsweise gestartet werden kann.

Eine Weiterbildung der Erfindung sieht vor, dass bei Betreiben der ersten Antriebsmaschine in dem Antriebsmodus die Kupplung geöffnet wird, über welche die erste Antriebsmaschine mit demjenigen Teilgetriebe verbindbar ist, das mit der zweiten Antriebsmaschine verbunden ist. Wenn die erste Antriebsmaschine, wie vorstehend beschrieben, in dem Antriebsmodus betrieben wird, so ist dies üblicherweise ausreichend, um das Anforderungsmoment alleine, also ohne die zweite Antriebsmaschine, bereitzustellen. In diesem Fall kann, sobald die erste Antriebsmaschine gestartet ist und somit in dem Antriebsmodus arbeitet, diejenige Kupplung geöffnet werden, über welche die erste Antriebsmaschine mit demjenigen Teilgetriebe verbindbar ist, das mit der zweiten Antriebsmaschine verbunden ist.

Eine Weiterbildung der Erfindung sieht vor, dass für das mit der zweiten Antriebsmaschine verbundene Teilgetriebe ein Fahrgang eingelegt und die Drehzahl der zweiten Antriebsmaschine entsprechend synchronisiert wird. Dies wird insbesondere durchgeführt, nachdem - wie vorstehend beschrieben - bei Betreiben der ersten Antriebsmaschine in dem Antriebsmodus die Kupplung geöffnet wurde, über welche die erste Antriebsmaschine mit demjenigen Teilgetriebe verbindbar ist, das mit der zweiten Antriebsmaschine verbunden ist. Auf diese Weise kann das Abtriebsmoment der Antriebsvorrichtung wenigstens vorübergehend allein mittels der ersten Antriebsmaschine bereitgestellt werden. Während dem Erzeugen des Abtriebsmoments allein mittels der ersten Antriebsmaschine kann das mit der zweiten Antriebsmaschine verbundene Teilgetriebe auf einen Fahrbetrieb vorbereitet werden, indem ein entsprechender Fahrgang eingelegt wird. Zuvor oder gleichzeitig wird die Drehzahl der zweiten Antriebsmaschine entsprechend synchronisiert, sodass die Drehzahl der zweiten Antriebsmaschine der Drehzahl auf der Antriebsseite des jeweiligen Teilgetriebes, welche aus der Umsetzung der auf der Abtriebsseite vorliegenden Drehzahl durch den Fahrgang resultiert, entspricht.

Eine Weiterbildung der Erfindung sieht vor, dass vor dem Schließen der ersten und/oder der zweiten Kupplung zunächst beide Kupplungen geöffnet werden, insbesondere wenn sie ein Drehmoment übertragen. Es ist also vorgesehen, vor dem erfindungsgemäßen Schließen der ersten und der zweiten Kupplung zunächst beide Kupplungen zu öffnen. Dies gilt insbesondere, wenn zumindest eine der Kupplungen zu diesem Zeitpunkt bereits ein Drehmoment überträgt. Auf diese Weise wird die Antriebsvorrichtung in den Fahrzustand gebracht. Das Öffnen kann beispielsweise notwendig sein, wenn das Schleppmoment der (deaktivierten) ersten Antriebsmaschine für ein Bremsen des Kraftfahrzeugs verwendet wird und zu diesem Zweck die nicht mit der zweiten Antriebsmaschine verbundene Kupplung wenigstens teilweise geschlossen ist.

Eine Weiterbildung der Erfindung sieht vor, dass der Fahrzustand während eines Entkopplungszustands der zweiten Antriebsmaschine eingestellt wird. Der Fahrzustand liegt demnach vor, wenn der Fahrgang für das mit der zweiten Antriebsmaschine verbundene Teilgetriebe gewechselt werden soll, die zweite Antriebsmaschine also von der Abtriebsseite des mit ihr verbundenen Teilgetriebes entkoppelt ist. Die zweite Antriebsmaschine hat bei einem Kraftfahrzeug insofern keinen direkten Durchgriff zum Antriebsstrang über das mit ihr verbundene Teilgetriebe. Zu diesem Zweck muss zunächst der momentan vorliegende Fahrgang ausgelegt werden, um nachfolgend den gewünschten Fahrgang einzulegen. Zwischenzeitlich liegt demnach für das Teilgetriebe kein Fahrgang vor. Tritt während des Fahrzustands die Beschleunigungsanforderung auf, so wird das Schalten des mit der zweiten Antriebsmaschine verbundenen Teilgetriebes unterbrochen, der gewünschte Gang wird demnach nicht eingelegt. Gleichzeitig wird auch eine eventuell bereits gestartete Synchronisierung der zweiten Antriebsmaschine unterbrochen. Stattdessen wird das vorstehend beschriebene Verfahren durchgeführt, also sowohl die erste als auch die zweite Kupplung geschlossen.

Eine Weiterbildung der Erfindung sieht vor, dass als erste Antriebsmaschine eine Brennkraftmaschine und/oder als zweite Antriebsmaschine eine elektrische Maschine verwendet wird. Unter der Brennkraftmaschine ist dabei beispielsweise eine Otto-Brennkraftmaschine oder eine Diesel-Brennkraftmaschine zu verstehen. Die elektrische Maschine ist insbesondere ein Elektromotor beziehungsweise ein Motorgenerator. Der Motorgenerator kann wechselweise entweder als elektrischer Antrieb oder als elektrischer Generator verwendet werden. Die Antriebsvorrichtung, welche die Brennkraftmaschine und die elektrische Maschine aufweist, liegt insoweit als Hybridantriebsvorrichtung vor. In dem Fahrzustand, in welchem beide Kupplungen geöffnet sind, liegt insoweit ein rein elektrischer Fahrbetrieb vor. Die erste Antriebsmaschine kann dabei abgeschaltet sein.

Die Erfindung betrifft weiterhin eine Vorrichtung zum Betreiben einer Antriebsvorrichtung, insbesondere gemäß den vorstehenden Ausführungen, wobei die Antriebsvorrichtung wenigstens eine erste Antriebsmaschine, wenigstens eine zweite Antriebsmaschine und ein Doppelkupplungsgetriebe mit einem ersten und einem zweiten Teilgetriebe aufweist, wobei die erste Antriebsmaschine über jeweils eine Kupplung mit einer Antriebsseite des ersten und des zweiten Teilgetriebes und die zweite Antriebsmaschine über eine Kopplungseinrichtung mit der Antriebsseite des ersten oder des zweiten Teilgetriebes verbindbar beziehungsweise verbunden ist, und wobei in zumindest einem Fahrzustand beide Kupplungen geöffnet sind und zumindest für das mit der zweiten Antriebsmaschine verbundene Teilgetriebe kein Fahrgang eingelegt ist. Es soll nochmals darauf hingewiesen werden, dass die Kopplungseinrichtung lediglich zur Drehmomentübertragung an die Antriebsseite eines der Teilgetriebe ausgebildet sein kann. Sie muss also nicht als Kupplungseinrichtung vorliegen, mittels welcher ein wechselweises Verbinden der zweiten Antriebsmaschine mit den Antriebsseiten des ersten und des zweiten Teilgetriebes möglich wäre.

Dabei ist vorgesehen, dass die Vorrichtung bei Auftreten einer Beschleunigungsanforderung während des Fahrzustands die Antriebsvorrichtung derart steuert, dass die folgenden Schritte durchgeführt werden: Einlegen oder Beibehalten eines Fahrgangs für das nicht mit der zweiten Antriebsmaschine verbundene Teilgetriebe, und Schließen der ersten und der zweiten Kupplung. Die Vorrichtung kann beispielsweise als Steuergerät der Antriebsvorrichtung vorliegen, welche dem Steuern und/oder Regeln der Antriebsvorrichtung beziehungsweise deren Bestandteilen dient. Die Vorrichtung steuert beziehungsweise regelt vorteilhafterweise neben dem Doppelkupplungsgetriebe und den Kupplungen auch die erste Antriebsmaschine und die zweite Antriebsmaschine, dient also gleichzeitig auch als Motorsteuergerät. Die Vorrichtung beziehungsweise die Antriebsvorrichtung kann gemäß den vorstehenden Ausführungen weitergebildet sein.

Die Erfindung wird im Folgenden anhand der in der Zeichnung dargestellten Ausführungsbeispiele näher erläutert, ohne dass eine Beschränkung der Erfindung erfolgt. Es zeigen:
- Figuren 1 bis 9: schematische Darstellungen einer Antriebsvorrichtung eines Kraftfahrzeugs für mehrere Verfahrensschritte eines Verfahrens in einer ersten Ausführungsform, und
- Figuren 10 bis 15: die bereits bekannten schematischen Darstellungen für Verfahrensschritte des Verfahrens in einer zweiten und einer dritten Ausführungsform.

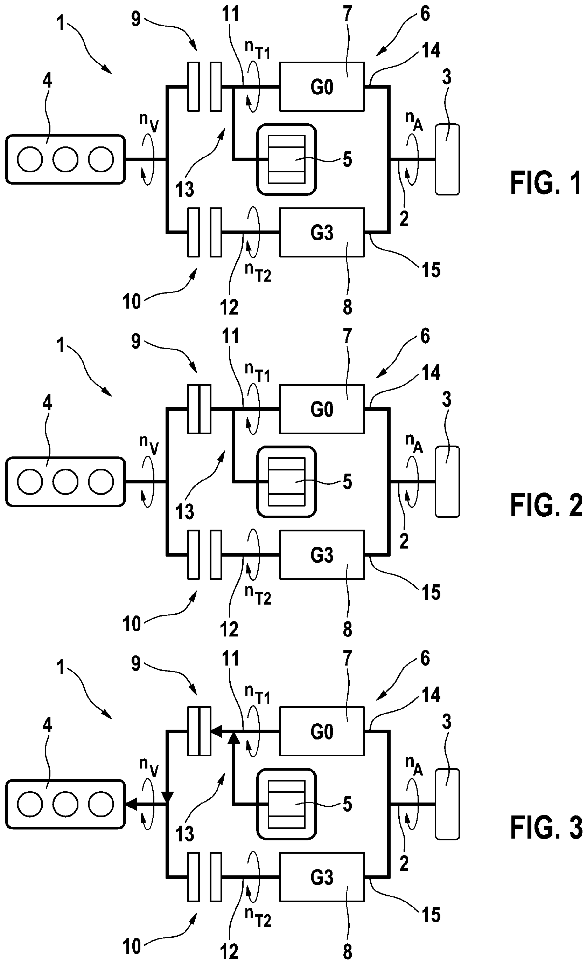

Die Figuren 1 bis 9 zeigen schematische Darstellungen einer Antriebsvorrichtung 1, die zum Antreiben eines Antriebsstrangs 2 beziehungsweise von Antriebsrädern 3 (von welchen hier lediglich eines dargestellt ist) eines hier nicht näher dargestellten Kraftfahrzeugs dient. Die Antriebsvorrichtung 1 ist als Hybridantriebsvorrichtung ausgebildet und weist dazu eine erste Antriebsmaschine 4, welche als Brennkraftmaschine vorliegt, und eine zweite Antriebsmaschine 5, welche als elektrische Maschine vorliegt, auf. Die Antriebsmaschinen 4 und 5 sind über ein Doppelkupplungsgetriebe 6 mit dem Antriebsstrang 2 beziehungsweise den Antriebsrädern 3 wirkverbunden. Das Doppelkupplungsgetriebe 6 weist ein erstes Teilgetriebe 7 und ein zweites Teilgetriebe 8 auf. Die erste Antriebsmaschine 4 ist über eine erste Kupplung 9 und eine zweite Kupplung 10 mit einer Antriebsseite 11 des ersten Teilgetriebes 7 beziehungsweise einer Antriebsseite 12 des zweiten Teilgetriebes 8 verbindbar. Das bedeutet, dass durch Öffnen beziehungsweise (zumindest teilweises) Schließen der Kupplung 9 und/oder der Kupplung 10 die erste Antriebsmaschine 4 entweder mit der Antriebsseite 11 des ersten Teilgetriebes 7 oder der Antriebsseite 12 des zweiten Teilgetriebes 8 oder beiden zur Übertragung eines Drehmoments wirkverbunden werden kann. Die erste Kupplung 9 ist demnach dem ersten Teilgetriebe 7 und die zweite Kupplung 10 dem zweiten Teilgetriebe 8 des Doppelkupplungsgetriebes 6 zugeordnet.

Der zweiten Antriebsmaschine 5 ist eine Kopplungseinrichtung 13 zugeordnet, mittels welcher sie mit der Antriebsseite 11 des ersten Teilgetriebes 7 oder der Antriebsseite 12 des zweiten Teilgetriebes 8 verbindbar beziehungsweise verbunden ist. In einer ersten möglichen Ausführungsform ist die Kopplungseinrichtung 13 dazu ausgebildet, dass die zweite Antriebsmaschine 5 abwechselnd entweder mit dem ersten Teilgetriebe 7 oder dem zweiten Teilgetriebe 8 beziehungsweise deren jeweiliger Antriebsseite 11 oder 12 wirkverbunden ist. In der hier dargestellten Ausführungsform ist die Kopplungseinrichtung 13 jedoch derart ausgestaltet, dass die zweite Antriebsmaschine 5 stets lediglich mit dem ersten Teilgetriebe 7 beziehungsweise dessen Antriebsseite 11 verbunden ist. Jedes der Teilgetriebe 7 und 8 weist eine Abtriebsseite 14 beziehungsweise 15 auf, welche - bezogen auf das jeweilige Teilgetriebe 7 oder 8 - der Antriebsseite 11 beziehungsweise 12 gegenüberliegt. Die Abtriebsseiten 14 und 15 der Teilgetriebe 7 und 8 sind derart gekoppelt, dass sie gemeinsam an den Antriebsstrang 2 beziehungsweise die Antriebsräder 3 angeschlossen sind.

Für das erste Teilgetriebe 7 können zumindest ungerade Fahrgänge, beispielsweise 1, 3, 5 und 7, und für das zweite Teilgetriebe zumindest die geraden Fahrgänge, beispielsweise 2, 4 und 6, eingelegt werden. Je höher der Fahrgang ist, desto niedriger ist sein eingestelltes Übersetzungsverhältnis i. So weist der erste Gang G1 in dem vorliegenden Ausführungsbeispiel ein Übersetzungsverhältnis von i = 16, der zweite Fahrgang G2 ein Übersetzungsverhältnis von i = 10 und der dritte Gang G3 ein Übersetzungsverhältnis von i = 6 auf. Für die Teilgetriebe 7 und 8 kann jedoch auch jeweils kein Gang (G0) eingelegt sein. In dem in der Figur 1 dargestellten Ausführungsbeispiel ist also für das erste Teilgetriebe 7 kein Fahrgang und für das zweite Teilgetriebe 8 der dritte Fahrgang eingelegt.

Sowohl mit der ersten Antriebsmaschine 4 als auch der zweiten Antriebsmaschine 5 ist ein jeweiliges Antriebsmoment auf die Antriebsseiten 11 und 12 der Teilgetriebe 7 und 8 aufbringbar. In den Figuren 1 bis 9 ist eine Drehzahl der ersten Antriebsmaschine 4 mit n_{V}, eine Drehzahl des Antriebsstrangs 2 mit n_{A}, eine Drehzahl der Antriebsseite 11 des ersten Teilgetriebes 7 mit n_{T1} und eine Drehzahl der Antriebsseite 12 des zweiten Teilgetriebes 8 mit n_{T2} bezeichnet. Die Drehzahl der zweiten Antriebsmaschine 5 entspricht dabei stets der Drehzahl der Antriebsseite 11 beziehungsweise 12 des Teilgetriebes 7 beziehungsweise 8, mit welchem die zweite Antriebsmaschine 5 verbunden ist. Die einzelnen, in den Figuren 1 bis 9 dargestellten Elemente sind durch Linien miteinander verbunden. Ist an einer der Linien eine Pfeilspitze eingetragen, so liegt zwischen den Elementen, welche durch die Linie verbunden sind, ein Drehmomentfluss vor. Ist keine Pfeilspitze dargestellt, so wird kein Drehmoment zwischen den durch die Linie verbundenen Elementen übertragen. Aus Gründen der Übersichtlichkeit ist eine als Steuergerät ausgebildete Vorrichtung zum Betreiben der Antriebsvorrichtung nicht dargestellt.

Die Figur 1 zeigt die Antriebsvorrichtung 1 während eines Fahrzustands, in welchem lediglich mittels der zweiten Antriebsmaschine 5 ein Drehmoment erzeugt wird. Die erste Antriebsmaschine 4 ist dagegen abgeschaltet und die Kupplungen 9 und 10 geöffnet. Für das mit der zweiten Antriebsmaschine 5 verbundene erste Teilgetriebe 7 ist kein Fahrgang eingelegt, beispielsweise weil gerade ein Fahrgangwechsel durchgeführt wird, sodass der bisherige Fahrgang ausgelegt, der gewünschte (zukünftige) Fahrgang jedoch noch nicht eingelegt ist. Für das zweite Teilgetriebe 8 ist dagegen der dritte Fahrgang eingelegt, welcher ein Übersetzungsverhältnis von i = 6 aufweist. Die Drehzahl des Antriebsstrangs 2 ist n_{A} = 50 rpm. Die Drehzahl auf der Antriebsseite 11 des ersten Teilgetriebes 7 ist beispielsweise n_{T1} = 200 rpm. Die Drehzahl auf der Antriebsseite 12 des zweiten Teilgetriebes 8 folgt aus dem dort eingestellten Übersetzungsverhältnis und ist hier folglich n_{T2} = i · n_{A} = 300 rpm. Die Drehzahlen sind selbstverständlich rein beispielhaft und können deutlich von den hier angegebenen abweichen.

Tritt in diesem Fahrzustand eine Beschleunigungsanforderung auf, so muss bei einer aus dem Stand der Technik bekannten Antriebsvorrichtung für das erste Teilgetriebe 7 ein Fahrgang eingelegt und die zweite Antriebsmaschine 5 entsprechend synchronisiert werden. Erst anschließend kann mittels der zweiten Antriebsmaschine 5 ein Drehmoment an dem Antriebsstrang 2 bereitgestellt werden.

Gemäß der Erfindung sollen bei Auftreten der Beschleunigungsanforderung während des Fahrzustands die folgenden Schritte durchgeführt werden: Einlegen oder Beibehalten eines Fahrgangs für das nicht mit der zweiten Antriebsmaschine 5 verbundene Teilgetriebe 8, und Schließen der ersten Kupplung 9 sowie der zweiten Kupplung 10. In dem vorliegenden Fall liegt für das zweite Teilgetriebe 8 bereits der gewünschte Fahrgang vor, beispielsweise weil er vor oder bei Auftreten des Fahrzustands bereits in Abhängigkeit von der Drehzahl des Antriebsstrangs 2 und/oder des Anforderungsmoments bestimmt und eingelegt wurde. Der Fahrgang kann aus diesem Grund beibehalten werden. Es ist nicht notwendig, den Fahrgang zu wechseln, was Verzögerungen nach sich ziehen würde.

Wie in der Figur 2 dargestellt, wird nun die erste Kupplung 9 geschlossen, sodass die erste Antriebsmaschine 4 mit der Antriebsseite 11 des ersten Teilgetriebes 7 und somit der zweiten Antriebsmaschine 5 wirkverbunden ist. Demnach entspricht die Drehzahl der ersten Antriebsmaschine 4 nun der Drehzahl der Antriebsseite 11 des ersten Teilgetriebes 7, sodass n_{V} = n_{T1} gilt. Die erste Antriebsmaschine 4 wird insofern von der zweiten Antriebsmaschine 5 auf die an ihr vorliegende Drehzahl geschleppt.

Gemäß Figur 3 wird nach dem Schließen der ersten Kupplung 9 die Drehzahl der zweiten Antriebsmaschine 5 auf eine Vorgabedrehzahl eingestellt, welche insbesondere von der momentanen Drehzahl verschieden ist. Beispielsweise ist die Vorgabedrehzahl der Antriebsseite 11 des ersten Teilgetriebes 7 gleich der Drehzahl auf der (noch abgekoppelten) Antriebsseite 12 des zweiten Teilgetriebes 8 n_{T2} (hier: n_{T1} = 300 rpm). Anschließend wird die Vorgabedrehzahl verändert, insbesondere erhöht. Dabei tritt ein Drehmomentfluss von der zweiten Antriebsmaschine 5 hin zu der ersten Antriebsmaschine 4 auf. Die Drehzahl n_{A} ist weiterhin 50 rpm.

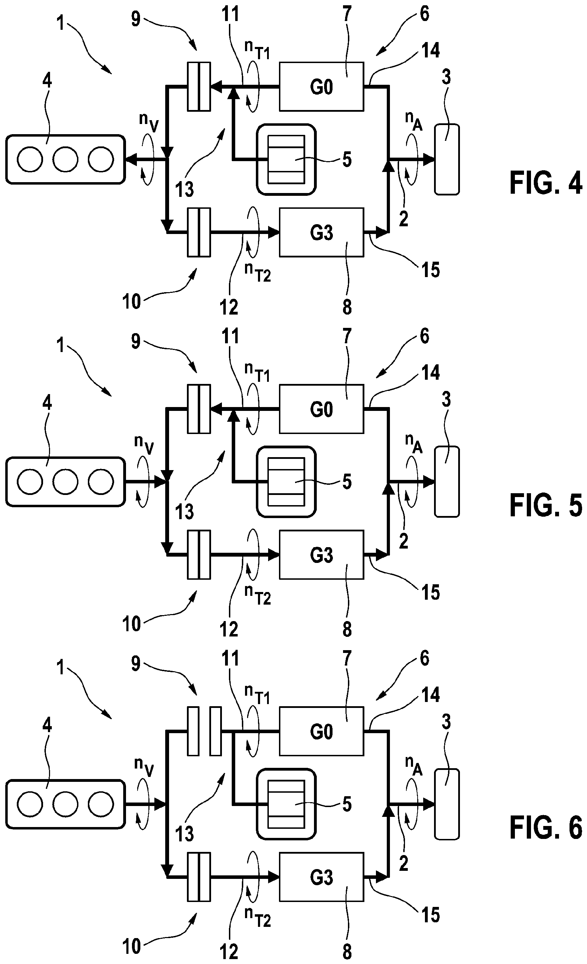

Ausgehend von den in der Figur 3 dargestellten Verfahrensschritt bis hin zu dem in der Figur 4 dargestellten Verfahrensschritt wird die Drehzahl der zweiten Antriebsmaschine 5 erhöht, beispielsweise auf n_{T1} = 400 rpm. Anschließend wird, wie in der Figur 4 dargestellt, die zweite Kupplung 10 ebenfalls geschlossen oder zumindest teilweise geschlossen, sodass das Drehmoment von der zweiten Antriebsmaschine 5 über die erste Kupplung 9 und die zweite Kupplung 10 an die Antriebsseite 12 des zweiten Teilgetriebes 8 übertragen wird. Bedingt durch an der zweiten Kupplung 10 auftretenden Schlupf kann es dabei vorkommen, dass die auf der Antriebsseite 12 des zweiten Teilgetriebes 8 vorliegende Drehzahl n_{T2} kleiner ist als die auf der Antriebsseite 11 vorliegende Drehzahl n_{T1} beziehungsweise die Drehzahl n_{V} der ersten Antriebsmaschine 4. Bedingt durch die geschlossene zweite Kupplung 10 wird sich die Drehzahl n_{T2} jedoch im Folgenden erhöhen. Dabei kann sich der Drehzahlunterschied reduzieren. Dies muss jedoch nicht der Fall sein, insbesondere wenn die Drehzahl n_{T1} vergrößert wird.

Bis zu dem in der Figur 5 dargestellten Verfahrensschritt soll die Drehzahl der zweiten Antriebsmaschine 5 so weit erhöht werden, dass ein Starten der ersten Antriebsmaschine 4 möglich ist, sodass diese gestartet und nachfolgend in einem Antriebsmodus betrieben werden kann. Rein beispielhaft wird zu diesem Zweck eine Drehzahl n_{T1} = n_{V} = 700 rpm eingestellt. Zwischenzeitlich hat sich aufgrund der zumindest teilweise geschlossenen zweiten Kupplung 10 die Drehzahl auf der Antriebsseite 12 des zweiten Teilgetriebes 8 auf n_{T2} = 360 rpm erhöht, womit entsprechend der Übersetzung des zweiten Teilgetriebes 8 die Drehzahl des Antriebsstrangs 2 n_{A} = 60 rpm ist.

Wie in der Figur 6 dargestellt, wird in einem nachfolgenden Verfahrensschritt die erste Kupplung 9 geöffnet, sodass lediglich mittels der ersten Antriebsmaschine 4 der Antriebsstrang 2 angetrieben wird. Die Drehzahl der ersten Antriebsmaschine 4 ist dabei gleichbleibend n_{V} = 700 rpm, während die Drehzahl der Antriebsseite 12 des zweiten Teilgetriebes 8 zwischenzeitlich n_{T2} = 420 rpm und die Drehzahl des Antriebsstrangs 2 n_{A} = 70 rpm erreicht haben.

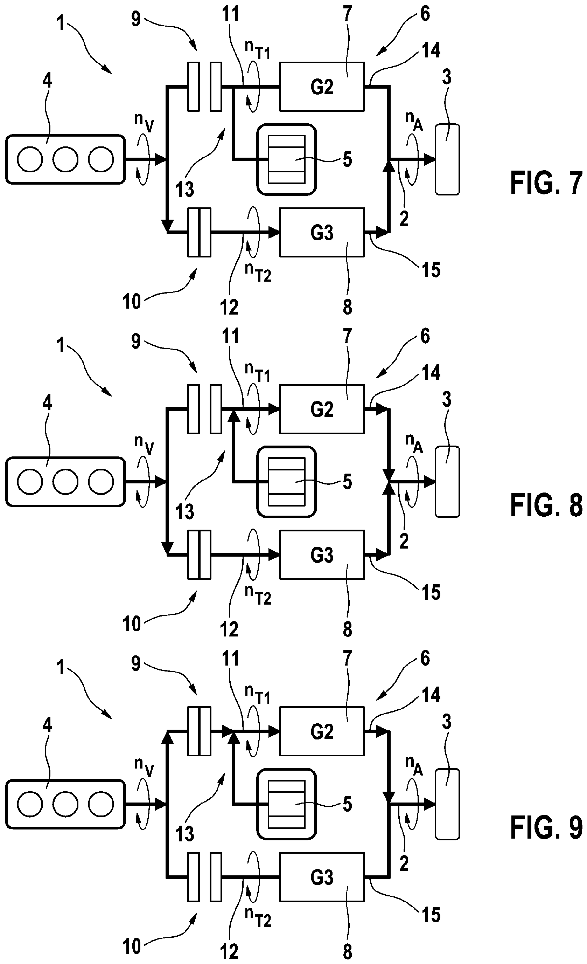

Wie in der Figur 7 dargestellt, kann in einem nachfolgenden Verfahrensschritt für das erste Teilgetriebe 7 ein Fahrgang (hier der zweite Fahrgang G2) eingelegt und die zweite Antriebsmaschine 5 synchronisiert werden. Weil die Drehzahl der Antriebsseite 12 des zweiten Teilgetriebes 8 mittlerweile n_{T2} = 480 rpm und die Drehzahl des Antriebsstrangs 2 n_{A} = 80 rpm beträgt, stellt sich auf der Antriebsseite 11 des ersten Teilgetriebes 7 eine Drehzahl n_{T1} = 800 rpm ein. Die zweite Antriebsmaschine 5 wird somit auf diese Drehzahl synchronisiert, bevor der Gang für das erste Teilgetriebe 7 eingelegt wird.

Nach dem Einlegen des Fahrgangs für das erste Teilgetriebe 7 kann das von der Antriebsvorrichtung 1 bereitgestellte Drehmoment gemeinsam von der ersten Antriebsmaschine 4 und der zweiten Antriebsmaschine 5 bereitgestellt werden, wie dies in der Figur 8 dargestellt ist. Die Drehzahlen betragen hier n_{V} = 700 rpm, n_{A} = 90 rpm, n_{T1} = 900 rpm und n_{T2} = 540 rpm.

Soll nachfolgend der Fahrgang für das zweite Teilgetriebe 8 gewechselt werden, wird die zweite Kupplung 10 geöffnet, die Drehzahl der ersten Antriebsmaschine 4 auf die Drehzahl der Antriebsseite 11 des ersten Teilgetriebes 7 angepasst und anschließend die erste Kupplung 9 geschlossen. Anschließend kann der Fahrgang für das zweite Teilgetriebe 8 ohne Weiteres gewechselt werden. Die Drehzahlen in dem in der Figur 9 dargestellten Verfahrensschritt betragen n_{V} = 1.000 rpm, n_{A} = 100 rpm, n_{T1} = 1.000 rpm und n_{T2} = 600 rpm.

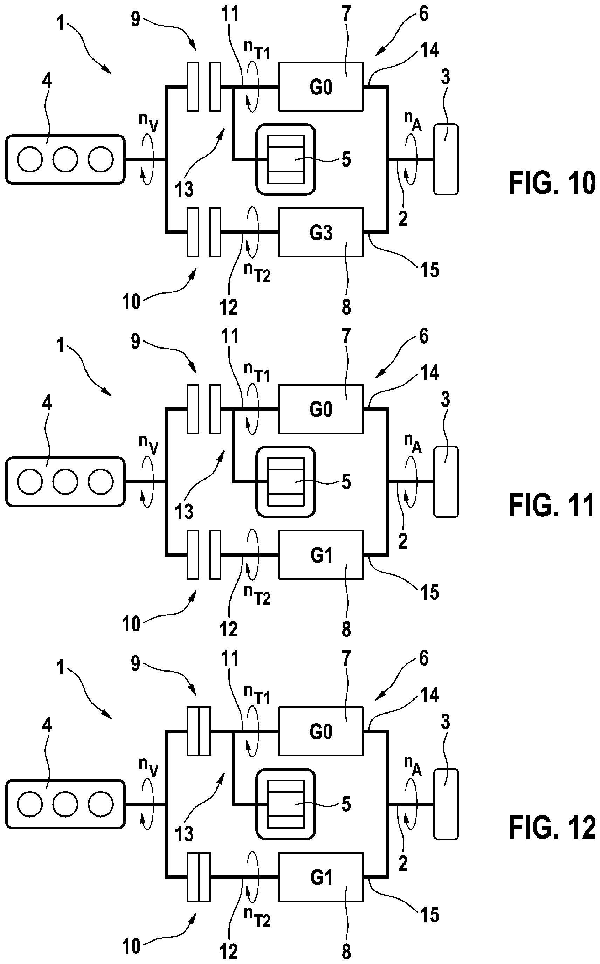

Die Figuren 10 bis 15 zeigen eine schematische Darstellung der Antriebsvorrichtung für Verfahrensschritte des Verfahrens in einer zweiten und einer dritten Ausführungsform. Der Aufbau der in den Figuren 10 bis 15 gezeigten Antriebsvorrichtung 1 entspricht dem anhand den Figuren 1 bis 9 beschriebenen, sodass insoweit auf die vorstehenden Ausführungen verwiesen wird.

Der in der Figur 10 beschriebene Verfahrensschritt entspricht dem der Figur 1. Es liegt also ein Fahrzustand vor, in dem beide Kupplungen 9 und 10 geöffnet sind und in welchem für das erste Teilgetriebe 7 kein Fahrgang eingelegt ist. Die Drehzahlen betragen hier n_{A} = 50 rpm, n_{T1} = 200 rpm und n_{T2} = 300 rpm, weil das zweite Teilgetriebe 8 den dritten Fahrgang mit einer Übersetzung i = 6 aufweist. Tritt nun die Beschleunigungsanforderung während des beschriebenen Fahrzustands auf, so wird in dem in der Figur 11 dargestellten Verfahrensschritt bei weiterhin geöffneten Kupplungen 9 und 10 für das zweite Teilgetriebe 8 der Fahrgang gewechselt (hier: in den ersten Fahrgang, welcher eine Übersetzung von i = 16 aufweist). Entsprechend stellt sich die Drehzahl n_{T2} = 800 rpm ein.

Für die zweite Ausführungsform soll in dem gleichen Verfahrensschritt die Drehzahl der zweiten Antriebsmaschine 5 auf diese Drehzahl eingestellt werden. Bereits vor dem Schließen der ersten Kupplung 9 oder der zweiten Kupplung 10 wird daher die Drehzahl der zweiten Antriebsmaschine 5 auf eine Vorgabedrehzahl eingestellt, welcher der Drehzahl auf der Antriebsseite 12 des zweiten Teilgetriebes 8 entspricht, sodass hier n_{T1} = 800 rpm ist. Nachdem die zweite Antriebsmaschine 5 diese Vorgabedrehzahl erreicht hat, werden - wie in der Figur 12 dargestellt - die Kupplungen 9 und 10 gleichzeitig geschlossen. Die Drehzahlen bleiben unverändert. Durch das Schließen der Kupplungen 9 und 10 kann der Antriebsstrang 2 mittels der zweiten Antriebsmaschine 5 mit einem Drehmoment beaufschlagt werden.

Alternativ kann für die dritte Ausführungsform lediglich - abweichend von der Darstellung in Figur 12 - zunächst nur die Kupplung 9, nicht jedoch die Kupplung 10 geschlossen werden. Anschließend werden die Drehzahlen n_{T1} und n_{V} gemeinsam erhöht bis n_{V} größer ist als n_{T2} oder dieser zumindest entspricht. Dann erst wird auch die Kupplung 10 geschlossen. Der Vorteil gegenüber der grundsätzlich ähnlichen ersten Ausführungsform besteht darin, dass die Drehzahl n_{V} der ersten Antriebsmaschine 4 schneller vergrößert werden kann und somit schneller ihre Startdrehzahl beziehungsweise Zünddrehzahl erreicht. Dagegen muss bei der ersten Ausführungsform die Kupplung 9 länger mit Schlupf, also teilweise geöffnet, vorliegen, weil die Drehzahl n_{V} der ersten Antriebsmaschine 4 geringer ist beziehungsweise nur langsamer vergrößert werden kann.

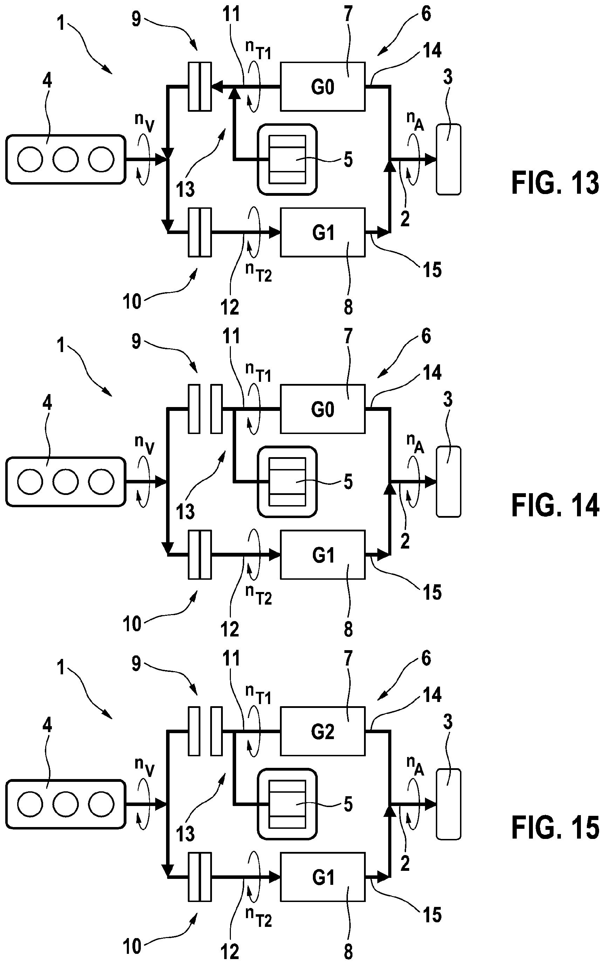

Dies ist in der Figur 13 dargestellt, wobei eine Beschleunigung des Antriebsstrangs 2 beziehungsweise des Kraftfahrzeugs vorgesehen ist. Die Drehzahl der zweiten Antriebsmaschine 5 wird demnach beispielsweise auf n_{T1} = 1.600 rpm erhöht. Somit liegt auch an der ersten Antriebsmaschine 4 diese Drehzahl vor, weil bedingt durch die vollständig geschlossene erste Kupplung 9 n_{V} = n_{T1} gilt. Diese Drehzahl reicht aus, um die erste Antriebsmaschine 4 zu starten und anschließend in dem Antriebsmodus zu betreiben. Wie in der Figur 13 dargestellt, soll also das an dem Antriebsstrang 2 vorliegende Drehmoment gemeinsam von der ersten Antriebsmaschine 4 und der zweiten Antriebsmaschine 5 erzeugt werden. Die hier vorliegenden Drehzahlen betragen n_{V} = 1.600 rpm, n_{A} = 100 rpm, n_{T1} = 1.600 rpm und n_{T2} = 1.600 rpm.

Die Figur 14 zeigt, dass in einem nachfolgenden Verfahrensschritt die erste Kupplung 9 geöffnet wird, um für das erste Teilgetriebe 7 einen Fahrgang einlegen zu können. Gleichzeitig wird mittels der ersten Antriebsmaschine 4 der Antriebsstrang 2 weiter beschleunigt. Die daraus resultierenden Drehzahlen sind n_{V} = 1.760 rpm, n_{A} = 110 rpm, n_{T1} = 1.600 rpm und n_{T2} = 1.760 rpm.

Gemäß der Figur 15 liegt in dem nachfolgenden Verfahrensschritt für das erste Teilgetriebe 7 ein Fahrgang (hier: der zweite Fahrgang mit einer Übersetzung i = 10) vor. Weil zwischenzeitlich mittels der ersten Antriebsmaschine 4 weiter beschleunigt wurde, betragen die Drehzahlen n_{V} = 1.920 rpm, n_{A} = 120 rpm und folglich n_{T1} = 1.200 rpm sowie n_{T2} = 1.920 rpm.

Mit den beiden vorstehend beschriebenen Ausführungsformen des erfindungsgemäßen Verfahrens kann auch in einem Fahrzustand, in welchem beide Kupplungen 9 und 10 geöffnet sind und zumindest für das mit der zweiten Antriebsmaschine 5 verbundene Teilgetriebe 7 kein Fahrgang eingelegt ist, bei Auftreten der Beschleunigungsanforderung während des Fahrzustands mit einer lediglich geringen beziehungsweise ohne Verzögerung der Antriebsstrang 2 des Kraftfahrzeugs beschleunigt werden. Die Beschleunigungsanforderung liegt beispielsweise bei Betätigung eines Gaspedals durch einen Fahrer des Kraftfahrzeugs oder bei Anforderung einer Beschleunigung durch eine Fahrerassistenzvorrichtung vor. Für beide Ausführungsformen des Verfahrens kann die erste Antriebsmaschine 4 sowohl in einem Schleppmodus als auch in dem beschriebenen Antriebsmodus betrieben werden. Die angeforderte Beschleunigung kann positiv oder negativ sein. Es ist also nicht notwendig, die erste Antriebsmaschine 4 tatsächlich - wie vorstehend beschrieben - zu aktivieren. Vielmehr kann diese auch während der Durchführung des Verfahrens in einem reinen Schleppmodus vorliegen beziehungsweise verbleiben.

## Patentansprüche

1. Verfahren zum Betreiben einer Antriebsvorrichtung (1), insbesondere eines Kraftfahrzeugs, wobei die Antriebsvorrichtung (1) wenigstens eine erste Antriebsmaschine (4), wenigstens eine zweite Antriebsmaschine (5) und ein Doppelkupplungsgetriebe (6) mit einem ersten und einem zweiten Teilgetriebe (7,8) aufweist, wobei die erste Antriebsmaschine (4) über jeweils eine Kupplung (9, 10) mit einer Antriebsseite (11,12) des ersten und des zweiten Teilgetriebes (7,8) und die zweite Antriebsmaschine (5) über eine Kopplungseinrichtung (13) mit der Antriebsseite (11,12) des ersten oder des zweiten Teilgetriebes (7,8) verbindbar beziehungsweise verbunden ist, und wobei in zumindest einem Fahrzustand beide Kupplungen (9, 10) geöffnet sind und zumindest für das mit der zweiten Antriebsmaschine (5) verbundene Teilgetriebe (7) aufgrund eines Fahrgangwechsels kein Fahrgang eingelegt ist, **dadurch gekennzeichnet, dass** bei Auftreten einer Beschleunigungsanforderung während des Fahrzustands die folgenden Schritte durchgeführt werden:
- Einlegen oder Beibehalten eines Fahrgangs für das nicht mit der zweiten Antriebsmaschine (5) verbundene Teilgetriebe (8), und
- Schließen der ersten und der zweiten Kupplung (9,10).

2. Verfahren nach Anspruch 1, **dadurch gekennzeichnet, dass** zunächst die Kupplung (9) geschlossen wird, über welche die erste Antriebsmaschine (4) mit demjenigen Teilgetriebe (7) verbindbar ist, das mit der zweiten Antriebsmaschine (5) verbunden ist, oder dass die erste und die zweite Kupplung (9,10) gleichzeitig geschlossen werden.

3. Verfahren nach einem der vorhergehenden Ansprüche, **dadurch gekennzeichnet, dass** nach dem Schließen der ersten und/oder der zweiten Kupplung (9,10) die Drehzahl der zweiten Antriebsmaschine (5) auf eine Vorgabedrehzahl eingestellt wird.

4. Verfahren nach einem der vorhergehenden Ansprüche, **dadurch gekennzeichnet, dass** nach dem Schließen der ersten und/oder der zweiten Kupplung (9,10) die erste Antriebsmaschine (4), insbesondere in Abhängigkeit von einem Anforderungsmoment, in einem Schleppmodus oder einem Antriebsmodus betrieben wird.

5. Verfahren nach einem der vorhergehenden Ansprüche, **dadurch gekennzeichnet, dass** bei Betreiben der ersten Antriebsmaschine (4) in dem Antriebsmodus die Kupplung (9) geöffnet wird, über welche die erste Antriebsmaschine (4) mit demjenigen Teilgetriebe (7) verbindbar ist, das mit der zweiten Antriebsmaschine (5) verbunden ist.

6. Verfahren nach einem der vorhergehenden Ansprüche, **dadurch gekennzeichnet, dass** für das mit der zweiten Antriebsmaschine (5) verbundene Teilgetriebe (7) ein Fahrgang eingelegt und die Drehzahl der zweiten Antriebsmaschine (5) entsprechend synchronisiert wird.

7. Verfahren nach einem der vorhergehenden Ansprüche, **dadurch gekennzeichnet, dass** vor dem Schließen der ersten und/oder der zweiten Kupplung (9,10) zunächst beide Kupplungen (9,10) geöffnet werden, insbesondere wenn sie ein Drehmoment übertragen.

8. Verfahren nach einem der vorhergehenden Ansprüche, **dadurch gekennzeichnet, dass** der Fahrzustand während eines Entkopplungszustands der zweiten Antriebsmaschine (5) eingestellt wird.

9. Verfahren nach einem der vorhergehenden Ansprüche, **dadurch gekennzeichnet, dass** als erste Antriebsmaschine (4) eine Brennkraftmaschine und/oder als zweite Antriebsmaschine (5) eine elektrische Maschine verwendet wird.

10. Vorrichtung zum Betreiben einer Antriebsvorrichtung (1), insbesondere zur Durchführung des Verfahrens nach einem oder mehreren der vorhergehenden Ansprüche, wobei die Antriebsvorrichtung (1) wenigstens eine erste Antriebsmaschine (4), wenigstens eine zweite Antriebsmaschine (5) und ein Doppelkupplungsgetriebe (6) mit einem ersten und einem zweiten Teilgetriebe (7,8) aufweist, wobei die erste Antriebsmaschine (4) über jeweils eine Kupplung (9, 10) mit einer Antriebsseite (11,12) des ersten und des zweiten Teilgetriebes (7,8) und die zweite Antriebsmaschine (5) über eine Kopplungseinrichtung (13) mit der Antriebsseite (11,12) des ersten oder des zweiten Teilgetriebes (7,8) verbindbar beziehungsweise verbunden ist, und wobei in zumindest einem Fahrzustand beide Kupplungen (9,10) geöffnet sind und zumindest für das mit der zweiten Antriebsmaschine (5) verbundene Teilgetriebe (7) aufgrund eines Fahrgangwechsels kein Fahrgang eingelegt ist, **dadurch gekennzeichnet, dass** die Vorrichtung bei Auftreten einer Beschleunigungsanforderung während des Fahrzustands die Antriebsvorrichtung (1) derart steuert, dass die folgenden Schritte durchgeführt werden:
- Einlegen oder Beibehalten eines Fahrgangs für das nicht mit der zweiten Antriebsmaschine (5) verbundene Teilgetriebe (8), und
- Schließen der ersten und der zweiten Kupplung (9,10).

## Claims

1. Method for operating a drive device (1), in particular of a motor vehicle, wherein the drive device (1) has at least a first drive machine (4), at least a second drive machine (5) and a double clutch transmission (6) with a first and a second partial transmission (7, 8), wherein the first drive machine (4) can be or is connected to a drive side (11, 12) of the first and of the second partial transmission (7, 8) via one clutch (9, 10) in each case, and the second drive machine (5) can be or is connected to the drive side (11, 12) of the first or of the second partial transmission (7, 8) via a clutch device (13), and wherein both the clutches (9, 10) are opened in at least one driving state and owing to a change of drive gear no drive gear is engaged at least for the partial transmission (7) which is connected to the second drive machine (5), **characterized in that** when an acceleration request occurs during the driving state the following steps are carried out:
- a drive gear for the partial transmission (8), which is not connected to the second drive machine (5), is engaged or maintained, and
- the first and the second clutches (9, 10) are closed.

2. Method according to Claim 1, **characterized in that** firstly the clutch (9) via which the first drive machine (4) can be connected to that partial transmission (7) which is connected to the second drive machine (5) is closed, or **in that** the first and the second clutches (9, 10) are closed simultaneously.

3. Method according to one of the preceding claims, **characterized in that** after the closing of the first and/or of the second clutches (9, 10) the rotational speed of the second drive machine (5) is set to a predefined rotational speed.

4. Method according to one of the preceding claims, **characterized in that** after the closing of the first and/or the second clutches (9, 10) the first drive machine (4) is operated, in particular as a function of a request torque in a towing mode or a drive mode.

5. Method according to one of the preceding claims, **characterized in that** when the first drive machine (4) is operated in the drive mode the clutch (9) via which the first drive machine (4) can be connected to that partial transmission (7) which is connected to the second drive machine (5) is opened.

6. Method according to one of the preceding claims, **characterized in that** a drive gear is engaged from the partial transmission (7) which is connected to the second drive machine (5), and the rotational speed of the second drive machine (5) is correspondingly synchronized.

7. Method according to one of the preceding claims, **characterized in that** before the closing of the first and/or the second clutches (9, 10) firstly both clutches (9, 10) are opened, in particular if they transmit a torque.

8. Method according to one of the preceding claims, **characterized in that** the driving state is set during a disengagement state of the second drive machine (5).

9. Method according to one of the preceding claims, **characterized in that** an internal combustion engine is used as the first drive machine (4), and/or an electric machine is used as the second drive machine (5).

10. Device for operating a drive device (1), in particular for carrying out the method according to one or more of the preceding claims, wherein the drive device (1) has at least a first drive machine (4), at least a second drive machine (5) and a double clutch transmission (6) with a first and a second partial transmission (7, 8), wherein the first drive machine (4) can be or is connected to a drive side (11, 12) of the first and of the second partial transmission (7, 8) via a clutch (9, 10) in each case, and the second drive machine (5) can be or is connected to the drive side (11, 12) of the first or of the second partial transmission (7, 8) via a clutch device (13), and wherein both clutches (9, 10) are opened in at least one driving state, and owing to a change of drive gear no drive gear is engaged at least for the partial transmission (7) which is connected to the second drive machine (5), **characterized in that** when an acceleration request occurs during the driving state the device controls the drive device (1) in such a way that the following steps are carried out:
- a drive gear is engaged or maintained for the partial transmission (8) which is not connected to the second drive machine (5), and
- the first and the second clutches (9, 10) are closed.

## Revendications

1. Procédé pour faire fonctionner un dispositif d'entraînement (1), en particulier d'un véhicule automobile, dans lequel le dispositif d'entraînement (1) présente au moins une première machine motrice (4), au moins une deuxième machine motrice (5) et une transmission à double embrayage (6) avec une première et une deuxième transmission partielle (7, 8), la première machine motrice (4) étant connectée ou pouvant être connectée par le biais d'un embrayage respectif (9, 10) à un côté d'entraînement (11, 12) de la première et de la deuxième transmission partielle (7, 8) et la deuxième machine motrice (5) étant connectée ou pouvant être connectée par le biais d'un dispositif d'accouplement (13) au côté d'entraînement (11, 12) de la première ou de la deuxième transmission partielle (7, 8) et, dans au moins un état de conduite, les deux embrayages (9, 10) étant ouverts et, au moins pour la transmission partielle (7) connectée à la deuxième machine motrice (5), aucun rapport de conduite n'étant enclenché suite à un changement de rapport de conduite, **caractérisé en ce que** suite à un ordre d'accélération, les étapes suivantes sont effectuées pendant l'état de conduite :
- enclenchement ou conservation d'un rapport de conduite pour la transmission partielle (8) qui n'est pas connectée à la deuxième machine motrice (5), et
- fermeture du premier et du deuxième embrayage (9, 10).

2. Procédé selon la revendication 1, **caractérisé en ce que** l'on ferme en premier l'embrayage (9) par le biais duquel la première machine motrice (4) peut être connectée à la transmission partielle (7) qui est connectée à la deuxième machine motrice (5), ou **en ce que** le premier et le deuxième embrayage (9, 10) sont fermés en même temps.

3. Procédé selon l'une quelconque des revendications précédentes, **caractérisé en ce qu'**après la fermeture du premier et/ou du deuxième embrayage (9, 10), la vitesse de rotation de la deuxième machine motrice (5) est ajustée à une vitesse de rotation prédéfinie.

4. Procédé selon l'une quelconque des revendications précédentes, **caractérisé en ce qu'**après la fermeture du premier et/ou du deuxième embrayage (9, 10), la première machine motrice (4), en particulier en fonction d'un couple exigé, est entraînée en mode entraîné ou en mode d'entraînement.

5. Procédé selon l'une quelconque des revendications précédentes, **caractérisé en ce que** pendant le fonctionnement de la première machine motrice (4) en mode d'entraînement, on ouvre l'embrayage (9) par le biais duquel la première machine motrice (4) peut être connectée à la transmission partielle (7) qui est connectée à la deuxième machine motrice (5).

6. Procédé selon l'une quelconque des revendications précédentes, **caractérisé en ce que** pour la transmission partielle (7) connectée à la deuxième machine motrice (5), un rapport de conduite est enclenché et la vitesse de rotation de la deuxième machine motrice (5) est synchronisée de manière correspondante.

7. Procédé selon l'une quelconque des revendications précédentes, **caractérisé en ce qu'**avant la fermeture du premier et/ou du deuxième embrayage (9, 10), tout d'abord les deux embrayages (9, 10) sont ouverts, en particulier lorsqu'ils transmettent un couple.

8. Procédé selon l'une quelconque des revendications précédentes, **caractérisé en ce que** l'état de conduite est ajusté pendant un état de désaccouplement de la deuxième machine motrice (5) .

9. Procédé selon l'une quelconque des revendications précédentes, **caractérisé en ce que** la première machine motrice (4) utilisée est un moteur à combustion interne et/ou la deuxième machine motrice (5) utilisée est un moteur électrique.

10. Dispositif pour faire fonctionner un dispositif d'entraînement (1), en particulier pour mettre en oeuvre le procédé selon l'une quelconque ou plusieurs des revendications précédentes, dans lequel le dispositif d'entraînement (1) présente au moins une première machine motrice (4), au moins une deuxième machine motrice (5) et une transmission à double embrayage (6) avec une première et une deuxième transmission partielle (7, 8), la première machine motrice (4) étant connectée ou pouvant être connectée par le biais d'un embrayage respectif (9, 10) à un côté d'entraînement (11, 12) de la première et de la deuxième transmission partielle (7, 8) et la deuxième machine motrice (5) étant connectée ou pouvant être connectée par le biais d'un dispositif d'accouplement (13) au côté d'entraînement (11, 12) de la première ou de la deuxième transmission partielle (7, 8), et, dans au moins un état de conduite, les deux embrayages (9, 10) étant ouverts et au moins pour la transmission partielle (7) connectée à la deuxième machine motrice (5), aucun rapport de conduite n'étant enclenché suite à un changement de rapport de conduite, **caractérisé en ce que** le dispositif, suite à un ordre d'accélération pendant l'état de conduite commande le dispositif d'entraînement (1) de telle sorte que les étapes suivantes soient mises en oeuvre :
- enclenchement ou conservation d'un rapport de conduite pour la transmission partielle (8) qui n'est pas connectée à la deuxième machine motrice (5), et
- fermeture du premier et du deuxième embrayage (9, 10).
